# EUROPÄISCHE PATENTSCHRIFT

(11) **EP 2 303 611 B1**
(45) Veröffentlichungstag und Bekanntmachung des Hinweises auf die Patenterteilung: **07.05.2014**
(21) Anmeldenummer: 09732454.5
(22) Anmeldetag: 06.04.2009
(51) Int. Cl.: F16F 1/38, F16F 1/393, B60G 7/00, F16C 11/06

(54) **GELENK- UND/ODER LAGERANORDNUNG**
JOINT AND/OR BEARING ARRANGEMENT
ENSEMBLE ARTICULATION ET/OU PALIER

(30) Priorität: 14.04.2008 DE 102008001157
(43) Veröffentlichungstag der Anmeldung: 06.04.2011
(73) Patentinhaber: ZF Friedrichshafen AG, 88038 Friedrichshafen (DE)
(72) Erfinder: BRUNNEKE, Hans-Gerd, 49124 Georgsmarienhütte (DE); LÖSCHE, Christian, 32351 Stemwede (DE)
(86) Internationale Anmeldenummer: PCT/DE2009/050017
(87) Internationale Veröffentlichungsnummer: WO 2009/127205

(56) Entgegenhaltungen:
- EP-A- 0 544 112
- WO-A-00/51833
- DE-A1- 3 725 102
- DE-A1- 4 004 679
- DE-A1- 4 215 195
- DE-A1- 10 219 708
- DE-A1- 19 634 215
- DE-A1- 19 932 678
- DE-A1-102006 025 558
- DE-C1- 3 921 468
- US-A- 5 286 132

## Beschreibung

Die Erfindung betrifft eine Gelenk- und/oder Lageranordnung mit zumindest zwei an einem Aufnahmebereich zusammengeführten Lenkern nach dem Oberbegriff des Anspruchs 1 oder des Anspruchs 5 sowie ein Kraftfahrzeug mit einer oder mehreren derartigen Gelenk- und/oder Lageranordnung(en), insbesondere in Fahrwerks- und/oder Lenkungsteilen.

Es ist bekannt, für viele Einsatzzwecke, insbesondere in Fahrwerks-und Lenkungsbereichen von Kraftfahrzeugen, sogenannte Dreiecklenker vorzusehen, die entweder einteilig sind oder, was für eine effektive Fertigung günstiger ist, die eine Ausbildung aus zwei einzelnen Lenkern aufweisen, die V-förmig aufeinander zulaufen und dabei in einen Aufnahmebereich münden. Dieser kann zur Aufnahme eines Gelenks oder Lagers dienen und zum Beispiel an einer Achse festgelegt sein, um diese über den Dreiecklenker beweglich an einer Karosserie oder einem Fahrzeugrahmen zu halten.

Die aufeinander zulaufenden Enden der Lenker müssen aneinander gehalten werden, wozu zum Beispiel gemäß der DE 102 19 708 A1 separate Bolzen vorgesehen sind, die die Lenkerenden axial durchgreifen und diese dadurch aneinander sichern. Eine solche Lösung ist jedoch in der Montage sehr aufwendig.

Aus der DE 199 32 678 A1 ist hingegen eine Lösung bekannt, bei der die beiden Lenkerenden über das Gelenk selbst, nämlich sein Gehäuse, aneinander sicherbar sind. Damit geht die Gefahr einher, dass sich bei der Bewegung im Fahrbetrieb das Gelenk in die Wandung des Aufnahmebereichs, der hier als rundes Auge ausgebildet ist, einarbeitet und es somit zu einem schnellen Verschleiß der Verbindung kommt. Zudem wird ein Ausbau des Lagers, zum Beispiel zu dessen verschleißbedingtem Ersatz, unmöglich, ohne dabei die Lenkerverbindung zwangsläufig aufzulösen. Dies erschwert die Handhabung derartiger Verbindungen.

Die DE 42 15 195 A1 zeigt Elastomerlager mit einem Innenteil, welches gegenüber dem Elastomer durch einen Formschluss über am Innenteil angeordnete Nasen eine Verdrehsicherung gegen Durchrutschen aufweist. Das Elastomer seinerseits ist in einem unrunden Gehäuse aufgenommen, so dass durch diesen Formschluss eine weitere Verdrehsicherung gebildet wird.

Der Erfindung liegt das Problem zugrunde, hier eine Verbesserung zu erreichen, insbesondere neben einer vereinfachten Montage eine einfache und wirkungsvolle Verdrehsicherung der Lenker gegeneinander bereitzustellen.

Die Erfindung löst dieses Problem durch eine Gelenk- oder Lageranordnung mit den Merkmalen des Anspruchs 1 bzw. des Anspruchs 3 sowie durch ein Kraftfahrzeug mit den Merkmalen des Anspruchs 14. Hinsichtlich vorteilhafter Ausgestaltungen und Weiterbildungen der Erfindung wird auf die weiteren Ansprüche 2 und 4 bis 13 verwiesen.

In der Ausbildung nach Anspruch 1 ist durch die Verdrehsicherung eine Relativbewegung des zusammenhaltenden Gelenks gegenüber den Innenwandungen des Aufnahmebereichs verhindert, so dass ein Verschleiß durch Reibung vermieden ist. Das Gelenk und die von diesem zusammengehaltenen Augen der verbundenen Lenker arbeiten nicht gegeneinander, sondern sind in ihrer Verbindung gegeneinander unverrückbar.

Erfindungsgemäß wirken dabei der radial äußere Verdrehsicherungsbereich des Gelenks und ein innerer Abschnitt des Aufnahmebereichs zusammen, durch zueinander komplementäre Gestaltung; durch ein formschlüssiges Ineinandergreifen der genannten Teile.

Hierfür können - auch für die Fertigung einfach - von einer runden Umrissgestalt abweichende Abflachungen vorgesehen werden.

Durch die Ausbildung nach Anspruch 3 ist erreicht, dass einerseits die aufeinander zulaufenden Enden der Lenker ohne weitere Haltemittel, wie etwa Bolzen, aneinander gesichert werden können und dadurch Montage-und Materialaufwand verringert sind; andererseits bleibt jedoch ein im Aufnahmebereich gehaltenes Gelenk oder Lager aufgrund des separaten Hülsenkörpers demontierbar, ohne dadurch die Verbindung der Lenker aneinander auflösen zu müssen.

Ein besonderer Vorteil der Erfindung liegt darin, dass verschiedene Hülsenkörper mit unterschiedlichen Wandungsstärken vorgesehen sein können, so dass zum Beispiel gleiche Gelenke an unterschiedliche große Aufnahmebereiche von Lenkerenden angepasst werden können. Das eigentliche Gelenk mit Zapfen, Gelenkkörperaufnahme und diese ganz oder teilweise einfassendem Gehäuse kann dennoch völlig unverändert bleiben und dadurch kostengünstig in großer Stückzahl vorkonfektioniert produziert werden.

Für einen festen Halt sind die dem Aufnahmebereich zugewandten Lenkerenden erfindungsgemäß im Presssitz auf dem Hülsenkörper gehalten, so dass dieser eine ortsfeste Schale zum Einschieben des Gelenks bildet. Insbesondere ist auch hier eine Verdrehsicherung vorgesehen, indem der Hülsenkörper außenseitig mit einer Kontur zur verdrehgesicherten Halterung der Lenkerenden versehen ist, etwa dadurch, dass der Hülsenkörper und die Aufnahmebereiche jeweils von einem Rundverlauf abweichende Abflachungen aufweisen.

Auch eine umgekehrte Anpassung derart, dass der Innendurchmesser der Hülsenkörper variiert und dadurch bei Anpassung an Aufnahmeeinheiten von Lenkerenden unterschiedliche Gelenke oder Lager eingesetzt werden können, ist möglich.

Weiter ist es günstig, wenn der Hülsenkörper an seinen axialen Außenseiten die Lenkerenden außenseitig zumindest bereichsweise umgreifende und gegen eine axiale Bewegung sichernde Rückhaltungen aufweist. Dadurch ergibt sich neben der Verdrehsicherung auch eine gute axiale Sicherung des Hülsenkörpers und des darin gehaltenen Gelenks oder Lagers.

Dabei kann für eine exakte axiale Anpassung zumindest eine der Rückhaltungen nach Einsetzen der Hülse in die Lenkerenden durch Umformung des Hülsenkörpers als zum Beispiel gerollter Rand ausgebildet werden. Ein separates Verschlusselement, etwa ein Sprengring, ist dann auch hier entbehrlich.

Weiterhin kann der Hülsenkörper an einem axialen Ende einen radial einwärts weisenden Anschlag für ein in den Hülsenkörper einführbares Gelenk oder Lager aufweisen, dass somit dessen korrekte axiale Ausrichtung einfach sichert. An der dem Anschlag gegenüberliegenden Seite kann ein Verschluss, wie etwa ein Sprengring, vorgesehen sein, um die Gelenk- oder Lagerpatrone in dem Hülsenkörper axial unverschieblich zu halten. Zur Demontage des Gelenks oder Lagers muss als einziger Schritt nur dieser Verschluss gelöst werden. Das Gelenk oder Lager kann dann ohne Gewalteinwirkung axial aus dem Hülsenkörper herausgezogen werden.

Für eine kostengünstige Montage kann ein jeweiliger Hülsenkörper mit dem darin gehaltenen Gelenk oder Lager eine insgesamt vorkonfektionierte Baueinheit ausbilden.

Ein Kraftfahrzeug mit zumindest einer erfindungsgemäßen Gelenk-und/oder Lageranordnung, insbesondere innerhalb von Fahrwerks-und/oder Lenkungsteilen, zum Beispiel auch zur Achsabstützung bei LKW, ist separat beansprucht.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine perspektivische Ansicht einer erfinderischen Anordnung mit von zwei an einem Aufnahmebereich mittels eines dort eingesetzten Gelenks zusammengehaltenen Lenkern,
- Fig. 2: eine Detailansicht, etwa entsprechend dem Ausschnitt II in Fig. 1,
- Fig. 3: eine Explosionsansicht der beiden im vorderen Lenkerenden sowie der radial äußeren Wandung des Gelenks aus Fig. 2 in noch nicht montierter Stellung,
- Fig. 4: eine ähnliche Ansicht wie Fig. 3 einer alternativen Ausführung des äußeren Randes des Gehäuses mit einer zusätzlich dort aufgebrachten Rändelung als Teil einer Verdrehsicherung,
- Fig. 5: eine ähnliche Ansicht wie Fig. 1, jedoch in einer alternativen Geometrie mit senkrecht stehender Gelenkachse,
- Fig. 6: eine schematische Draufsicht auf eine Fertigungseinheit für gegossene durchgehende Dreieckslenker,
- Fig. 7: eine ähnliche Ansicht auf die gleiche Fertigungseinheit wie in Fig. 6, jedoch jetzt bei Herstellung von einzelnen, erst später zu verbindenden Lenkern,
- Fig. 8: eine ähnliche Ansicht wie Fig. 2, jedoch einer Ausführung gemäß Anspruch 3, bei der das Gelenk mit seinem Gehäuse vollständig von einem Hülsenkörper, der die Aufnahmebereiche der Lenker verbindet, auswechselbar aufgenommen ist.

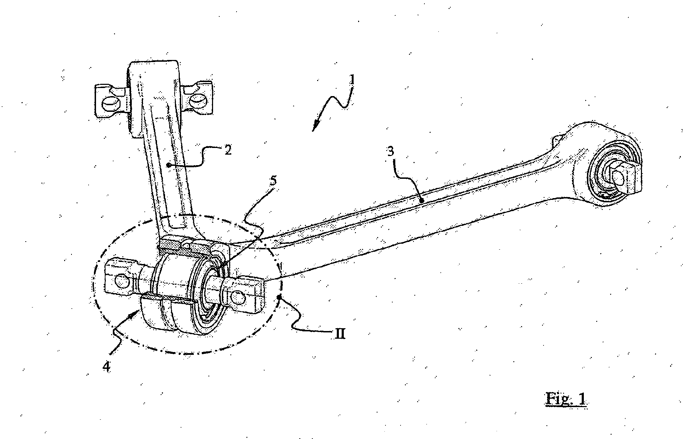

Die in Fig. 1 insgesamt dargestellte Gelenkeinheit 1 umfasst zwei in einer Dreieckslenkeranordnung spitzwinklig aufeinander zulaufende Lenker 2, 3, die hier geradlinig sind, was nicht zwingend ist. Sie münden jeweils an der Dreiecksspitze in eine Aufnahmeeinheit 4, die ein Auge zur Aufnahme eines durchgehenden Gelenks 5 umfasst. An ihren rückwärtigen Enden können sie ebenfalls über Gelenke beweglich gelagert sein, zum Beispiel an einer Karosserie oder einem Tragrahmen.

Das Gelenk 5 (auch ein Lager wäre möglich) umfasst einen beweglich in einer Gelenkkörperaufnahme 6 gehaltenen Gelenkkörper 7, der hier in seinem axial mittigen Bereich kugelförmig erweitert ist. Die Gelenkkörperaufnahme 6 kann durch ein Elastomer, zum Beispiel Gummi, gebildet sein, das sich mit dem Gelenkkörper 7 bei entsprechender Verbindung zwischen den Teilen durch elastische Verformung mitbewegen kann. Eine reibende Relativbewegung zwischen dem Gelenkkörper 7 und der als Einbettung wirkenden Gelenkkörperaufnahme 6 ist dann nicht erforderlich. Zudem ist ein die Gelenkkörperaufnahme 6 aufnehmendes und radial außen umgreifendes Gehäuse 8 vorgesehen. Das Gehäuse 8 besteht beispielsweise aus Metall. Zur Sicherung der Gelenkkörperaufnahme 6 sind axial außen liegende und am Gehäuse 8 abgestützte Anschlagringe 20 vorgesehen, über die auch eine axiale Vorspannung in die Gelenkkörperaufnahme 6 eingetragen werden kann.

Über das Gelenk 5 sind die beiden Lenker 2, 3 in montierter Stellung (Fig. 1) ohne weitere Verbindung, wie etwa durchgreifende Bolzen oder ähnliches, miteinander fest verbunden.

Dies wird im ersten Ausführungsbeispiel nach den Figuren 1 bis 3 dadurch ermöglicht, dass das Gehäuse 8 in montierter Stellung gleichzeitig beide Aufnahmebereiche 4 der Lenker 2, 3 durchgreift und diese aneinander hält.

Hierzu weist das Gehäuse 8 außenseitig zumindest einen von einem Kreisumriss abweichenden Verdrehsicherungsbereich 9 auf. Im vorliegenden Beispiel sind zwei Verdrehsicherungsbereiche 9, 10 oben und unten vorgesehen, die jeweils als Abflachungen des äußeren Umrisses des Gehäuses 8 ausgebildet sind. Die Aufnahmebereiche 4 der Lenker 2, 3 sind in ihrer Formgebung daran angepasst und weisen ebenfalls obere und untere Abflachungen 11, 12 auf, die mit den Verdrehsicherungsbereichen 9, 10 des Gehäuses 8 formschlüssig zusammenwirken. Die Abflachungen 11, 12 sind hier nur axial innen an den Aufnahmebereichen 4 ausgeformt, so dass diese von außen jeweils eine runde Umrissgestalt aufweisen.

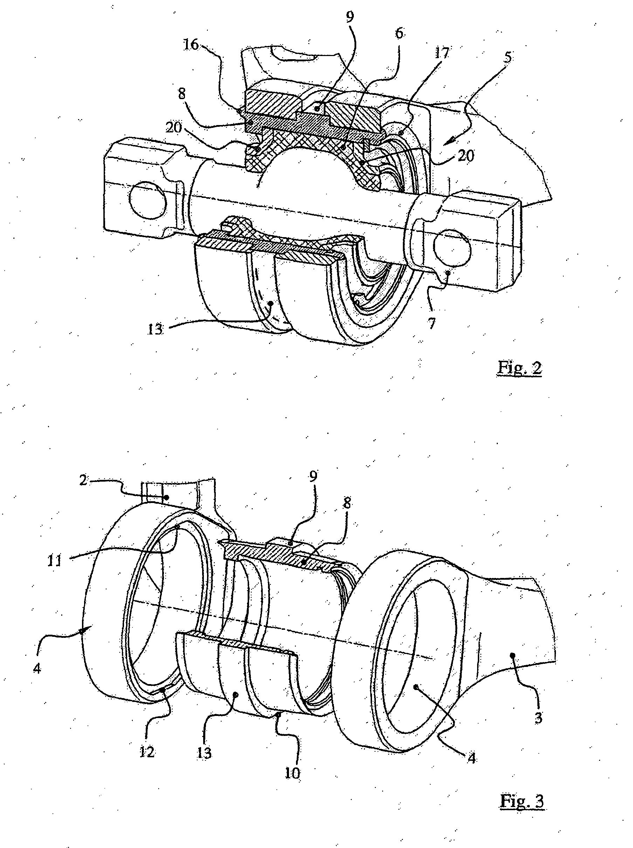

Wie beispielsweise in den Figuren 2 und 3 ersichtlich ist, weist das Gehäuse 8 einen umlaufenden Mittelsteg 13 auf, an dem gegenüberliegend die Verdrehsicherungen 9, 10 angeordnet sind. Dieser hält in Eingriffsstellung (Fig. 2) beide Lenker 2, 3 auf axialer Distanz zueinander, so dass diese keinen direkten Kontakt zueinander haben und auch insoweit einem Verschleiß der Lenker 2, 3 durch Reibung aneinander vorgebeugt ist. Eine Reibung der Lenker 2, 3 an dem Mittelsteg ist durch die Verdrehsicherungen 9, 10 ebenfalls verhindert.

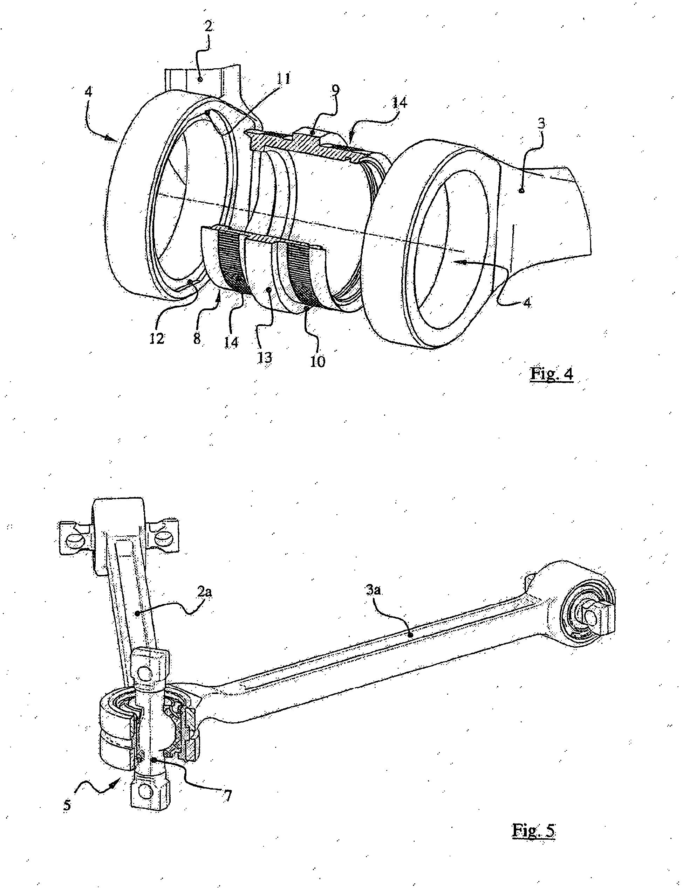

In Fig. 4 ist eine Alternativversion dargestellt, die als weitere Verdrehsicherung zusätzlich eine Rändelung 14 auf der Außenseite des Gehäuses 8 vorsieht. Diese gewährleistet insbesondere in Kombination mit dem Distanzsteg 13 und den Verdrehsicherungen 9, 10 eine sehr zuverlässige Vermeidung von Bewegungen der Teile 5, 2, 3 gegeneinander.

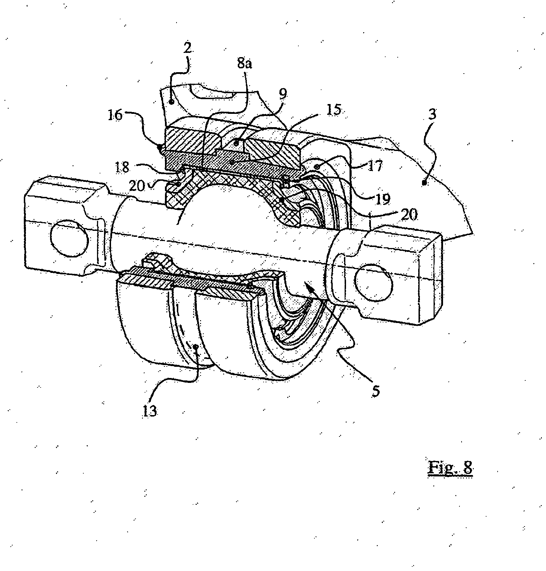

In Fig. 8 ist eine Ausbildung der Erfindung dargestellt, bei der das Gelenk 5 mitsamt seiner äußeren Gehäusewandung 8a innerhalb eines Hülsenkörpers 15 aufgenommen ist, der gleichzeitig die Lenker 2, 3 in ihren Aufnahmebereichen 4 zusammenhält.

Damit kann das gesamte Gelenk 5 vollständig - zum Beispiel zu Wartungs- oder Austauschzwecken - axial aus dem Hülsenkörper 15 herausgezogen werden, ohne dass der Zusammenhalt der Enden der Lenker 2, 3 aneinander gefährdet wäre. Um dies zu erreichen, liegt der Hülsenkörper 15 hier außerhalb der eigentlichen Gehäusewandung 8a, die in diesem Fall - anders als im ersten Ausführungsbeispiel - separat ausgebildet ist.

Ansonsten entspricht dieser Hülsenkörper 15 dem Gehäuse 8 des ersten Ausführungsbeispiels nach den Figuren 1 bis 3 bzw. 4.

Auch hier sind die dem Aufnahmebereich 4 zugewandten Enden der Lenker 2, 3 im Presssitz auf dem Hülsenkörper 15 gehalten, ebenfalls ist auch hier der Hülsenkörper 15 außenseitig mit einer Kontur 9, 10 zur verdrehgesicherten Halterung der Lenkerenden versehen, die in zum Beispiel genau so wie in den Figuren 1 bis 3 durch Abflachungen 9, 10 an einem Distanzsteg 13 ausgebildet sein kann. Auch eine Rändelung 14 oder ausgreifende Sicken, Rippen oder ähnliches ist möglich.

Ebenso ist hier der Hülsenkörper 15 und im ersten Ausführungsbeispiel das Gehäuse 8 an seinen axialen Außenseiten mit die Lenkerenden außenseitig zumindest bereichsweise umgreifenden und gegen eine axiale Bewegung sichernde Rückhaltungen versehen, hier durch Rollkanten 16, 17, die jeweils erst nach Einfügen des Teils 15 bzw. 8 in die Aufnahmebereiche der Lenkerenden durch Umformung gebildet werden (Übergang von Fig. 3 zu Fig. 2).

Der Hülsenkörper 15 des Ausführungsbeispiels nach Fig. 8 bzw. die Gehäusewandung 8 des ersten Ausführungsbeispiels ist insbesondere aus Stahl gebildet ist und weist eine Wandungsstärke von zumindest drei Millimetern auf, um die gewünschte hohe Stabilität der axialen Halterung der Lenker 2, 3 aneinander und ihrer Verdrehsicherung gegeneinander bezüglich der Gelenkachse 7 sicherzustellen. Insbesondere ist es mit der Erfindung auch möglich, ein Sortiment von Hülsenkörpern 15 bzw. Gehäusen 8 unterschiedlicher Wandungsstärken zur Verfügung zu stellen, um damit an sich gleichartige Gelenke 5 in Aufnahmebereiche 4 von unterschiedlichen Durchmessern einpressen zu können. Damit ist eine hohe Flexibilität erreicht, wobei insbesondere durch die Verwendung der jeweils gleichen Gelenke 5 trotz unterschiedlicher Durchmesser der Augen 4 ein großes Einsparpotential gegeben ist.

Weiter ist in Fig. 8 erkennbar, dass der Hülsenkörper 15 an einem axialen Ende einen radial einwärts weisenden Anschlag 18 für das in den Hülsenkörper 15 einführbare Gelenk 5 oder Lager aufweist. An dem dem Anschlag 18 axial gegenüber gelegenen Ende kann zum Beispiel eine Nut oder dergleichen Aufnahme für einen das eingeführte Lager oder Gelenk 5 sichernden Verschluss, insbesondere einen Sprengring 19, vorgesehen sein.

Nach dessen Lösen kann das gesamte Gelenk 5 oder Lager axial aus dem Hülsenkörper 15 herausgezogen werden, der in seinem Presssitz zur Halterung der Lenker 2, 3 aneinander verbleiben kann.

Fertigungstechnisch ist es für eine Serienproduktion besonders vorteilhaft, wenn der Hülsenkörper 15 mit dem darin gehaltenen Gelenk 5 oder Lager eine vorkonfektionierte Baueinheit bildet, die dann wie eine Patrone eingesetzt werden kann.

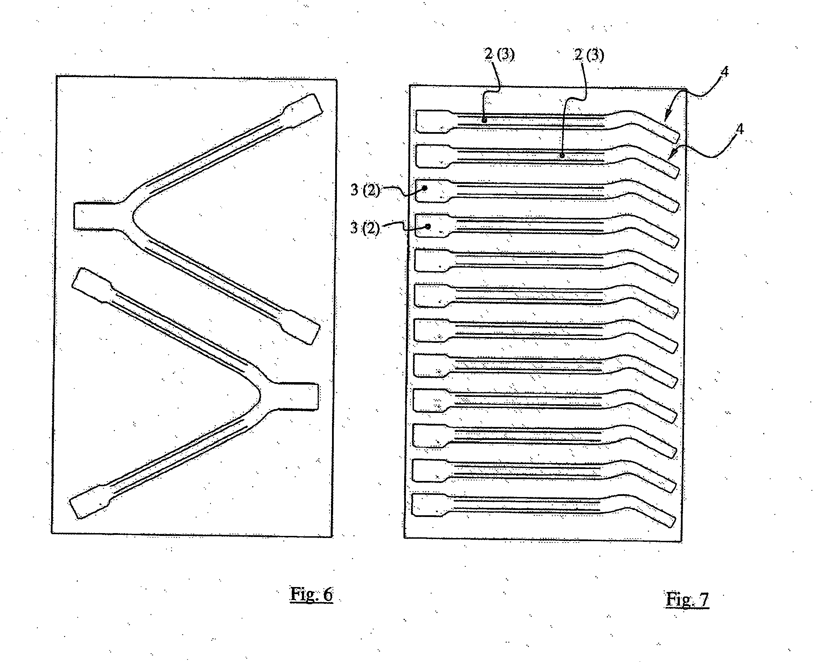

In den Figuren 6 und 7 ist vergleichend gegenübergestellt, wie die Effektivität der Lenkerherstellung von spitz aufeinander zulaufenden Dreieckslenkern durch Verwendung von einzelnen Lenkern 2, 3 (Fig. 7) gegenüber einem durchgehenden Lenker (Fig. 6) durch bessere Flächenausnutzung gesteigert werden kann.

Insbesondere können auch die Lenker 2, 3 völlig gleichartig ausgebildet sein. Dann muss bei der Montage nicht zwischen verschiedenen Lenkern unterschieden werden. Im montierten Zustand laufen die Lenker 2, 3 spitzwinklig aufeinander zu (Fig. 1). In der Praxis sind Öffnungswinkel von 40° bis 60° üblich.

Solche Gelenk- und/oder Lagereinheiten 1, wie in Fig. 1 dargestellt, können beispielsweise längs im Fahrzeug zur Abstützung einer Achse - insbesondere bei LKW - angeordnet sein. Das Gelenk 5 in der Aufnahme 4 liegt dann quer zum Fahrzeug und kann die Achse beweglich halten.

Auch andere Anordnungen in insbesondere Fahrwerks- und/oder Lenkungsteilen bieten sich an. So ist es auch möglich (s. Fig. 5), die Aufnahmebereiche senkrecht zu stellen, um so die Montage eines Gelenks 5 mit senkrecht stehender Achse vorsehen zu können.

### Bezugszeichenliste

- 1: Gelenk- oder Lageranordnung
- 2: Lenker
- 3: Lenker
- 4: Aufnahmebereich
- 5: Gelenk
- 6: Gelenkkörperaufnahme
- 7: Gelenkkörper
- 8: Gehäuse
- 8a: Gehäuse
- 9: Verdrehsicherung (Abflachung)
- 10: Verdrehsicherung (Abflachung)
- 11: angepasster Bereich des Lenkerendes
- 12: angepasster Bereich des Lenkerendes
- 13: Distanzsteg
- 14: Rändelung
- 15: Hülsenkörper
- 16: Rollrand
- 17: Rollrand
- 18: Anschlag
- 19: Sprengring
- 20: Anschlagringe

## Patentansprüche

1. Gelenk- und/oder Lageranordnung (1) mit zumindest zwei an einem Aufnahmebereich (4) zusammengeführten Lenkern (2;3), die in ihren Aufnahmebereichen (4) ein Gelenk (5) oder Lager aufnehmen, wobei das Gelenk oder Lager (5) einen in einer Gelenkkörperaufnahme (6) gehaltenen Gelenkkörper (7) und ein die Gelenkkörperaufnahme (6) aufnehmendes und radial außen umgreifendes Gehäuse (8) umfasst,
**dadurch gekennzeichnet, dass** dieses Gehäuse (8) außenseitig zumindest einen von einem Kreisumriss abweichenden Verdrehsicherungsbereich (9; 10; 14) aufweist und dass der Aufnahmebereich (4) der Lenker (2;3) in seiner Formgebung an den Verdrehsicherungsbereich (9; 10; 14) des Gehäuses (8) angepasst (11; 12) ist, so dass der Verdrehsicherungsbereich (9; 10) formschlüssig in den Aufnahmebereich (4) der Lenker (2; 3) eingreift.

2. Gelenk- und/oder Lageranordnung (1) nach Anspruch 1,
**dadurch gekennzeichnet, dass** der Verdrehsicherungsbereich (9; 10) eine Abflachung des radialen Außenumrisses des Gehäuses (8) umfasst.

3. Gelenk- und/oder Lageranordnung (1) mit zumindest zwei an einem Aufnahmebereich (4) zusammengeführten Lenkern (2; 3), die in ihrem Aufnahmebereich (4) ein Gelenk (5) oder Lager aufnehmen, wobei das Gelenk oder Lager (5) einen beweglich in einer Gelenkkörperaufnahme (6) gehaltenen Gelenkkörper (7) und ein die Gelenkkörperaufnahme (6) aufnehmendes und radial umgreifendes Gehäuse (8a) umfasst,
**dadurch gekennzeichnet, dass** dieses Gelenk oder Lager (5) in einem die Lenker (2; 3) zusammenhaltenden Hülsenkörper (15) gehalten ist, auf welchem die dem Aufnahmebereich (4) zugewandten Lenkerenden einerseits im Presssitz gehalten sind und andererseits mittels einer am Hülsenkörper (15) außenseitig vorgesehenen Kontur (9; 10; 14) verdrehgesichert gehalten sind.

4. Gelenk- und/oder Lageranordnung (1) nach Anspruch 3,
**dadurch gekennzeichnet, dass** der Hülsenkörper (15) an seinen axialen Außenseiten mit die Lenkerenden außenseitig zumindest bereichsweise umgreifende und gegen eine axiale Bewegung sichernde Rückhaltungen (16; 17) versehen ist.

5. Gelenk- und/oder Lageranordnung (1) nach Anspruch 4,
**dadurch gekennzeichnet, dass** zumindest eine der Rückhaltungen (16; 17) nach Einsetzen der Hülse (15) in die Lenkerenden durch Umformung des Hülsenkörpers ausgebildet ist.

6. Gelenk- und/oder Lageranordnung (1) nach Anspruch 5,
**dadurch gekennzeichnet, dass** die zumindest eine durch Umformung gebildete Rückhaltung (16; 17) als gerollter Rand ausgebildet ist.

7. Gelenk- und/oder Lageranordnung (1) nach einem der Ansprüche 3 bis 6,
**dadurch gekennzeichnet, dass** der Hülsenkörper (15) aus Stahl gebildet ist und eine Wandungsstärke von zumindest drei Millimetern aufweist.

8. Gelenk- und/oder Lageranordnung (1) nach einem der Ansprüche 3 bis 7,
**dadurch gekennzeichnet, dass** ein Sortiment von Hülsenkörpern (15) unterschiedlicher Wandungsstärken vorgesehen ist.

9. Gelenk- und/oder Lageranordnung (1) nach einem der Ansprüche 3 bis 8,
**dadurch gekennzeichnet, dass** der Hülsenkörper (15) an einem axialen Ende einen radial einwärts weisenden Anschlag (18) für ein in den Hülsenkörper (15) einführbares Gelenk oder Lager (5) aufweist.

10. Gelenk- und/oder Lageranordnung (1) nach Anspruch 9,
**dadurch gekennzeichnet, dass** der Hülsenkörper (15) an seinem dem Anschlag (18) axial gegenüber gelegenen Ende eine Nut oder dergleichen Aufnahme für einen das eingeführte Lager oder Gelenk (5) sichernden Verschluss, insbesondere einen Sprengring (19), aufweist.

11. Gelenk- und/oder Lageranordnung (1) nach Anspruch 10,
**dadurch gekennzeichnet, dass** nach Lösen des Verschlusses (19) das Gelenk (5) oder Lager axial aus dem Hülsenkörper (15) auszieh- oder -drückbar ist.

12. Gelenk- und/oder Lageranordnung (1) nach einem der Ansprüche 3 bis 11,
**dadurch gekennzeichnet, dass** der Hülsenkörper (15) mit darin gehaltenen Gelenk (5) oder Lager eine vorkonfektionierte Baueinheit bildet.

13. Gelenk- und/oder Lageranordnung (1) nach einem der Ansprüche 1 bis 12,
**dadurch gekennzeichnet, dass** die zusammengehaltenen Lenker (2; 3) einen im Aufnahmebereich (4) zusammenlaufenden Dreieckslenker ausbilden.

14. Kraftfahrzeug mit zumindest einer Gelenk- und/oder Lageranordnung (1) nach einem der Ansprüche 1 bis 3, insbesondere innerhalb von Fahrwerks- und/oder Lenkungsteilen.

## Claims

1. Joint and/or bearing arrangement (1) having at least two links (2; 3) which are combined at a receiving region (4) and receive a joint (5) or bearing in their receiving regions (4), the joint or bearing (5) comprising a joint body (7) which is held in a joint-body seat (6) and a housing (8) which receives and engages radially around the outside of the joint-body seat (6), **characterized in that** the said housing (8) has, on the outer side, at least one anti-rotation safeguard region (9; 10; 14) which differs from a circular outline, and **in that** the shape of the receiving region (4) of the links (2; 3) is adapted (11; 12) to the anti-rotation safeguard region (9; 10; 14) of the housing (8), with the result that the anti-rotation safeguard region (9; 10) engages in a positively locking manner into the receiving region (4) of the links (2; 3).

2. Joint and/or bearing arrangement (1) according to Claim 1, **characterized in that** the anti-rotation safeguard region (9; 10) comprises a flattened portion of the radial outer outline of the housing (8).

3. Joint and/or bearing arrangement (1) having at least two links (2; 3) which are combined at a receiving region (4) and receive a joint (5) or bearing in their receiving region (4), the joint or bearing (5) comprising a joint body (7) which is held movably in a joint-body seat (6) and a housing (8a) which receives and engages radially around the joint-body seat (6), **characterized in that** the said joint or bearing (5) is held in a sleeve body (15) which holds the links (2; 3) together and on which the link ends which face the receiving region (4) are held firstly in the press fit and secondly are held in a manner which is secured against rotation by means of a contour (9; 10; 14) which is provided on the outer side of the sleeve body (15).

4. Joint and/or bearing arrangement (1) according to Claim 3, **characterized in that** the sleeve body (15) is provided on its axial outer sides with retaining means (16; 17) which engage around the outside of the link ends at least in regions and secures them against an axial movement.

5. Joint and/or bearing arrangement (1) according to Claim 4, **characterized in that** at least one of the retaining means (16; 17) is formed by reshaping of the sleeve body after insertion of the sleeve (15) into the link ends.

6. Joint and/or bearing arrangement (1) according to Claim 5, **characterized in that** the at least one retaining means (16; 17) which is formed by reshaping is configured as a rolled edge.

7. Joint and/or bearing arrangement (1) according to one of Claims 3 to 6, **characterized in that** the sleeve body (15) is formed from steel and has a wall thickness of at least three millimetres.

8. Joint and/or bearing arrangement (1) according to one of Claims 3 to 7, **characterized in that** an assortment of sleeve bodies (15) of different wall thicknesses is provided.

9. Joint and/or bearing arrangement (1) according to one of Claims 3 to 8, **characterized in that** the sleeve body (15) has, at one axial end, a radially inwardly pointing stop (18) for a joint or bearing (5) which can be introduced into the sleeve body (15).

10. Joint and/or bearing arrangement (1) according to Claim 9, **characterized in that**, at its end which lies axially opposite the stop (18), the sleeve body (15) has a groove or a receptacle of the like for a closure, in particular a circlip (19), which secures the introduced bearing or joint (5).

11. Joint and/or bearing arrangement (1) according to Claim 10, **characterized in that**, after release of the closure (19), the joint (5) or bearing can be pulled or pressed axially out of the sleeve body (15).

12. Joint and/or bearing arrangement (1) according to one of Claims 3 to 11, **characterized in that** the sleeve body (15) forms a pre-assembled structural unit with a joint (5) or bearing which is held therein.

13. Joint and/or bearing arrangement (1) according to one of Claims 1 to 12, **characterized in that** the links (2; 3) which are held together form a triangular link which merges in the receiving region (4).

14. Motor vehicle having at least one joint and/or bearing arrangement (1) according to one of Claims 1 to 13, in particular within chassis and/or steering parts.

## Revendications

1. Ensemble articulation et/ou palier (1) avec au moins deux bielles (2; 3) réunies dans une région de logement (4), qui contiennent dans leurs régions de logement (4) une articulation (5) ou un palier, dans lequel l'articulation ou le palier (5) comprend un corps d'articulation (7) maintenu dans un logement de corps d'articulation (6) et un boîtier (8) contenant et entourant radialement à l'extérieur le logement de corps d'articulation (6), **caractérisé en ce que** ce boîtier (8) présente du côté extérieur au moins une région de blocage de rotation (9; 10; 14) s'écartant d'un pourtour circulaire et **en ce que** la région de logement (4) des bielles (2; 3) est adaptée par sa configuration (11; 12) à la région de blocage de rotation (9; 10; 14) du boîtier (8), de telle manière que la région de blocage de rotation (9; 10) s'engage par emboîtement dans la région de logement (4) des bielles (2; 3).

2. Ensemble articulation et/ou palier (1) selon la revendication 1, **caractérisé en ce que** la région de blocage de rotation (9; 10) comprend un méplat du pourtour extérieur radial du boîtier (8).

3. Ensemble articulation et/ou palier (1) avec au moins deux bielles (2; 3) réunies dans une région de logement (4), qui contiennent dans leur région de logement (4) une articulation (5) ou un palier, dans lequel l'articulation ou le palier (5) comprend un corps d'articulation (7) maintenu de façon mobile dans un logement de corps d'articulation (6) et un boîtier (8a) contenant et entourant radialement le logement de corps d'articulation (6), **caractérisé en ce que** cette articulation ou ce palier (5) est maintenu(e) dans un corps de douille (15) rassemblant les bielles (2; 3), sur lequel les extrémités de bielle tournées vers la région de logement (4) sont d'une part maintenues en ajustement serré et sont d'autre part maintenues de façon bloquée contre la rotation au moyen d'un contour (9; 10; 14) prévu du côté extérieur sur le corps de douille (15).

4. Ensemble articulation et/ou palier (1) selon la revendication 3, **caractérisé en ce que** le corps de douille (15) est muni, sur ses côtés extérieurs axiaux, de moyens de retenue (16; 17) entourant au moins localement du côté extérieur les extrémités de bielles et les bloquant contre un déplacement axial.

5. Ensemble articulation et/ou palier (1) selon la revendication 4, **caractérisé en ce qu'**au moins un des moyens de retenue (16; 17) est réalisé par déformation du corps de douille après l'introduction de la douille (15) dans les extrémités des bielles.

6. Ensemble articulation et/ou palier (1) selon la revendication 5, **caractérisé en ce que** ledit au moins un moyen de retenue (16; 17) formé par déformation est réalisé sous la forme d'un bord enroulé.

7. Ensemble articulation et/ou palier (1) selon l'une quelconque des revendications 3 à 6, **caractérisé en ce que** le corps de douille (15) est fabriqué en acier et présente une épaisseur de paroi d'au moins 3 millimètres.

8. Ensemble articulation et/ou palier (1) selon l'une quelconque des revendications 3 à 7, **caractérisé en ce qu'**il est prévu un assortiment de corps de douille (15) de différentes épaisseurs de paroi.

9. Ensemble articulation et/ou palier (1) selon l'une quelconque des revendications 3 à 8, **caractérisé en ce que** le corps de douille (15) présente, à une extrémité axiale, une butée (18) dirigée radialement vers l'intérieur pour une articulation ou un palier (5) à introduire dans le corps de douille (15).

10. Ensemble articulation et/ou palier (1) selon la revendication 9, **caractérisé en ce que** le corps de douille (15) présente, à son extrémité située axialement à l'opposé de la butée (18), une rainure ou un logement analogue pour un verrou, en particulier une bague élastique (19), bloquant le palier ou l'articulation (5) introduit(e).

11. Ensemble articulation et/ou palier (1) selon la revendication 10, **caractérisé en ce que**, après la libération du verrou (19), l'articulation (5) ou le palier peut être retiré ou repoussé axialement hors du corps de douille (15).

12. Ensemble articulation et/ou palier (1) selon l'une quelconque des revendications 3 à 11, **caractérisé en ce que** le corps de douille (15) forme, avec l'articulation (5) ou le palier qu'il contient, une unité de construction préfabriquée.

13. Ensemble articulation et/ou palier (1) selon l'une quelconque des revendications 1 à 12, **caractérisé en ce que** les bielles rassemblées (2; 3) forment une bielle triangulaire se rejoignant dans la région de logement (4).

14. Véhicule automobile avec au moins un ensemble articulation et/ou palier (1) selon l'une quelconque des revendications 1 à 13, en particulier à l'intérieur de parties du mécanisme de roulement et/ou de direction.
